# EUROPÄISCHE PATENTANMELDUNG

(11) **EP 2 511 039 A1**
(43) Veröffentlichungstag der Anmeldung: **17.10.2012**
(21) Anmeldenummer: 12075004.7
(22) Anmeldetag: 12.01.2012
(51) Int. Cl.: B23K 26/26, B23K 26/32

(54) **Verfahren zum Laserstrahlschweissen eines mit einem metallischen Überzug versehenen Vorproduktes aus Stahl unter Verwendung eines Schutzgases aus Ar, Co2 und O2**

(30) Priorität: 12.04.2011 DE 102011017144
(71) Anmelder: Salzgitter Europlatinen GmbH, 38239 Salzgitter (DE)
(72) Erfinder: Flügge, Wilko, Dr., 38312 Cramme (DE); Höfemann, Matthias, Dr., 30451 Hannover (DE)
(74) Vertreter: Meissner, Peter E.

(57) **Zusammenfassung**

Die Erfindung betrifft ein Verfahren zum Laserstrahlschweißen eines mit einem metallischen Überzug versehenen Vorproduktes aus Stahl unter Schutzgas wobei der Überzug im Wesentlichen aus hochschmelzenden, während des Schweißens nicht verdampfenden Legierungsbestandteilen besteht und bei dem der metallische Überzug in eine beim Schweißen gebildete Schweißnaht einbezogen wird.

Dabei wird die Schmelzbaddynamik des Schweißgutes durch Schweißen unter Verwendung eines Schutzgases, bestehend aus Ar, CO₂ und O₂, derart beeinflusst, dass die Legierungselemente des metallischen Überzugs eine intensive Durchmischung mit dem Schweißgut in der Weise erfahren, so dass diese nach der Erstarrung in fein verteilter Form hierin vorliegen.

## Beschreibung

Die Erfindung betrifft ein Verfahren zum Laserstrahlschweißen eines mit einem metallischen, insbesondere Al-Si-Überzug versehenen Vorproduktes aus Stahl zur Herstellung eines Bauteils, gemäß dem Oberbegriff des Patentanspruches 1.

Unter Bauteil wird hier ein aus einem Vorprodukt z. B. Blechplatine oder Rohr durch weitere Verarbeitungsschritte wie beispielsweise durch Kalt- oder Warmumformung mittels eines Umformwerkzeuges hergestelltes Teil verstanden.

Derartige Bauteile werden wie nachfolgend beschrieben zurzeit vornehmlich in der Automobilindustrie für Karosserie- oder Fahrwerksteile eingesetzt, aber auch andere Einsatzfelder wie beispielsweise der Maschinenbau oder Baubereich sind denkbar.

In der Automobilindustrie zwingt der heiß umkämpfte Markt ständig nach Lösungen zur Senkung des Flottenverbrauches unter Beibehaltung eines höchstmöglichen Komforts und Insassenschutzes zu suchen. Dabei spielt einerseits die Gewichtsersparnis aller Fahrzeugkomponenten eine entscheidende Rolle andererseits aber auch ein möglichst günstiges Verhalten der einzelnen Bauteile bei hoher statischer und dynamischer Beanspruchung im Betrieb wie auch im Crashfall.

Dieser Notwendigkeit versuchen die Vormateriallieferanten einerseits dadurch Rechnung zu tragen, dass durch die Bereitstellung hoch- und höchstfester Stähle die Wanddicken reduziert werden können bei gleichzeitig verbessertem Bauteilverhalten bei der Fertigung und im Betrieb.

Andererseits wird versucht dieses Ziel durch die Bereitstellung belastungsoptimierter Stahlbleche zu erreichen, die entsprechend den zu erwartenden Belastungen dickenoptimiert sind oder aus unterschiedlich festen Werkstoffen bestehen. Derartige Bleche können sowohl als geschweißte, insbesondere mittels Laserschweißen, als sogenannte Taylored welded blanks und gewalzt, bekannt als Taylored rolled blanks, hergestellt werden.

Diese Bleche oder Bänder müssen vergleichsweise hohen Anforderungen hinsichtlich Festigkeit, Dehnfähigkeit, Zähigkeit, Energieaufnahme, Korrosionsbeständigkeit und ihrer Verarbeitbarkeit, wie beispielsweise Kalt- oder Warmumformung, Schweißen und/oder Oberflächenbehandlung, genügen.

Unter den vorgenannten Aspekten gewinnt die Herstellung von Bauteilen aus belastungsoptimierten Blechen unter Verwendung presshärtbarer Stähle zunehmend an Bedeutung, da diese bei geringerem Materialaufwand die gestiegenen Anforderungen an die Bauteileigenschaften ideal erfüllen.
Die Herstellung von Bauteilen durch Abschreckung von presshärtbaren Stählen in einem Umformwerkzeug ist aus der DE 601 19 826 T2 bekannt. Hier wird eine zuvor auf 800 -1200°C erwärmte und mit einem metallischen Überzug aus Zink oder auf Basis von Zink versehene Blechplatine in einem fallweise gekühlten Werkzeug durch Warmumformung zu einem Bauteil umgeformt, wobei während des Umformens durch schnellen Wärmeentzug das Blech bzw. Bauteil im Umformwerkzeug eine Abschreckhärtung (Presshärtung) erfährt und dadurch die geforderten Festigkeitseigenschaften erreicht.

Der metallische Überzug wird als Korrosionsschutz üblicherweise im kontinuierlichen Schmelztauchverfahren auf ein Warm- oder Kaltband bzw. auf das daraus hergestellte Vorprodukt aufgebracht, z. B. als Feuerverzinkung oder Feueraluminierung.

Anschließend wird das Vorprodukt (Blechplatine, Rohr) für das Umformwerkzeug der Warmumformung passend zugeschnitten. Möglich ist auch, das jeweils umzuformende Werkstück, bzw. den Zuschnitt, mit einem Schmelztauchüberzug zu versehen.

Das Aufbringen eines metallischen Überzugs auf das umzuformende Vorprodukt vor dem Warmumformen ist von großem Vorteil, weil durch den Überzug eine Verzunderung des Grundmaterials und durch eine zusätzliche Schmierwirkung übermäßiger Werkzeugverschleiß wirksam vermieden werden.

Bekannte warmumformbare Stähle für diesen Einsatzbereich sind z. B. der Mangan-Bor-Stahl "22MnB5" und neuerdings auch luftvergütbare Stähle gemäß einer noch unveröffentlichten Patentanmeldung des Anmelders.

Luftvergütbare Stähle haben gegenüber dem "22MnB5" den Vorteil, dass bei entsprechend langsamer Abkühlung im Umformwerkzeug und anschließender Luftabkühlung auf die nachträgliche kostenaufwändige Glühung zur Erreichung der geforderten Bauteil-Dehnungswerte verzichtet werden kann.

Außerdem ist ein höheres Formänderungsvermögen aufgrund eines besseren Umformungsverhaltens von erwärmten Zuschnitten zu erreichen, da die Zuschnitte unter Nutzung der Restwärme weiter umgeformt werden können und so komplexere Geometrien gegenüber dem bekannten Verfahren möglich sind.

Bei der Herstellung von mit einem metallischen Überzug versehenen Tailored welded Blanks mittels Laserschweißen besteht ein Problem darin, dass bei Anwesenheit von Überzugsbestandteilen während des Laserschweißens die Schweißnähte durch Verdampfung des Überzugs Fehlstellen aufweisen können, die Schwachstellen darstellen und bei anschließenden Umformprozessen beim Kalt- oder Warmumformen zum Versagen des Bauteils im Schweißnahtbereich führen können. Dies ist insbesondere bei metallischen Überzügen, die hauptsächlich aus Zink bestehen, der Fall. Metallische Überzuge werden deshalb im Regelfall vor dem Schweißen aus dem Schweißbereich entfernt (DE 20 2007 018 832 U1).
Bei metallischen Überzügen, die beispielsweise einen hohen Anteil an hochschmelzenden Legierungsbestandteilen wie Al oder Cr aufweisen, verdampft der Überzug nicht, sondern die Elemente verbleiben in flüssiger oder fester Form im Schweißbereich und diffundieren in das Schweißgut und können durch Bildung von intermetallischen Phasen und bei ungünstiger Verteilung im Schweißgut das Tragverhalten der Schweißverbindung bei einer Umformung oder sonstiger statischer oder dynamischer Beanspruchung negativ beeinflussen.

Aus der DE 10 2008 006 625 A1 und der DE 202007 018 832 U1 ist es zur Vermeidung derartiger Probleme bei einem Al-Si-Überzug bekannt, den Überzug vor dem Schweißprozess aus dem Wechselwirkungsbereich von Laserstrahl und Bauteilwerkstoff vollständig zu entfernen.

Bei dem in der DE 103 24 274 A1 beschriebenen Verfahren kann der Al-Si-Überzug dagegen im Schweißnahtbereich belassen werden, allerdings muss zur Sicherstellung einer einwandfreien Schweißnahtqualität der Laserstrahl mehrfach über die Schweißstelle geführt werden. Ziel ist es hierbei, dass die Bestandteile des Überzugs durch mehrfaches Aufschmelzen in das Schmelzgut der Schweißnaht einlegiert und fein verteilt werden.

Diese bekannten Verfahrensweisen haben alle den Nachteil aufwändiger, zusätzlicher Verfahrensschritte, die das Vorprodukt bzw. Bauteil deutlich verteuern und unwirtschaftlicher machen.

Der Erfindung lag daher die Aufgabe zugrunde, ein Verfahren zum Laserstrahlschweißen eines mit einem hochschmelzenden metallischen Überzug versehenen Vorproduktes aus Stahl anzugeben, mit dem ohne Entfernung des metallischen Überzugs aus dem Schweißbereich, kostengünstig qualitativ einwandfreie Schweißverbindungen hergestellt werden können, die insbesondere auch für nachfolgende Kalt- oder Warmumformprozesse geeignet sind.

Nach der Lehre der Erfindung wird diese Aufgabe durch ein Verfahren gelöst, bei dem die Schmelzbaddynamik des Schweißgutes durch Schweißen unter Verwendung eines Schutzgases, bestehend aus Ar, CO₂ und O₂, derart beeinflusst wird, dass die Legierungselemente des metallischen Überzugs eine intensive Durchmischung mit dem Schweißgut in der Weise erfahren, so dass diese nach der Erstarrung in fein verteilter Form hierin vorliegen.

Das erfindungsgemäße Verfahren weist gegenüber den bekannten Verfahren den großen Vorteil auf, dass der Überzug nicht mehr aufwändig vor dem Schweißen aus dem Schweißbereich entfernt werden muss oder der Überzug durch zeit- und kostenintensives mehrmaliges Überschweißen der Schweißnaht in das Schweißgut einlegiert wird.

Grundsätzlich lässt sich die Schmelzbaddynamik über Prozessparameter wie Laserleistung, Schweißgeschwindigkeit, Fokuslage etc. ebenfalls beeinflussen, es hat sich jedoch bei Versuchen überraschend herausgestellt, dass die hierüber erzielbaren Einflussmöglichkeiten deutlich hinter dem signifikanten Einfluss des jeweils verwendeten Schutzgases zurücktreten.

Dadurch ist die Schmelzbaddynamik so positiv zu beeinflussen, dass die Legierungselemente mit dem Schweißgut intensiv durchmischt und anschließend nach der Erstarrung dort fein verteilt vorliegen und damit sehr günstige Eigenschaften für nachfolgende mechanische Beanspruchungen aufweisen. Durch die feine und homogene Verteilung im Schweißgut wird auch eine deutliche Verbesserung der Warmumformbarkeit erreicht.

Als besonders vorteilhaft hat sich herausgestellt, das Laserstrahlschweißen unter Verwendung eines Schutzgases bestehend aus Ar, CO₂ und O₂ durchzuführen. Hervorragende Ergebnisse wurden beispielsweise mit einem Schutzgas bestehend aus 0,5-20 % CO₂, 0,1 - 10 % O₂ und Rest Ar erreicht.

Nachfolgend werden einige Versuchsergebnisse näher erläutert. Bei den Versuchen wurden mit einem Überzug aus Al-Si versehene Blechplatinen aus einem 22MnB5 mittels Laserschweißverfahren mit zwei verschiedenen Schutzgasen im 1-Stoß miteinander verschweißt, ohne dass die Beschichtung im Bereich der Schweißstelle entfernt wurde.

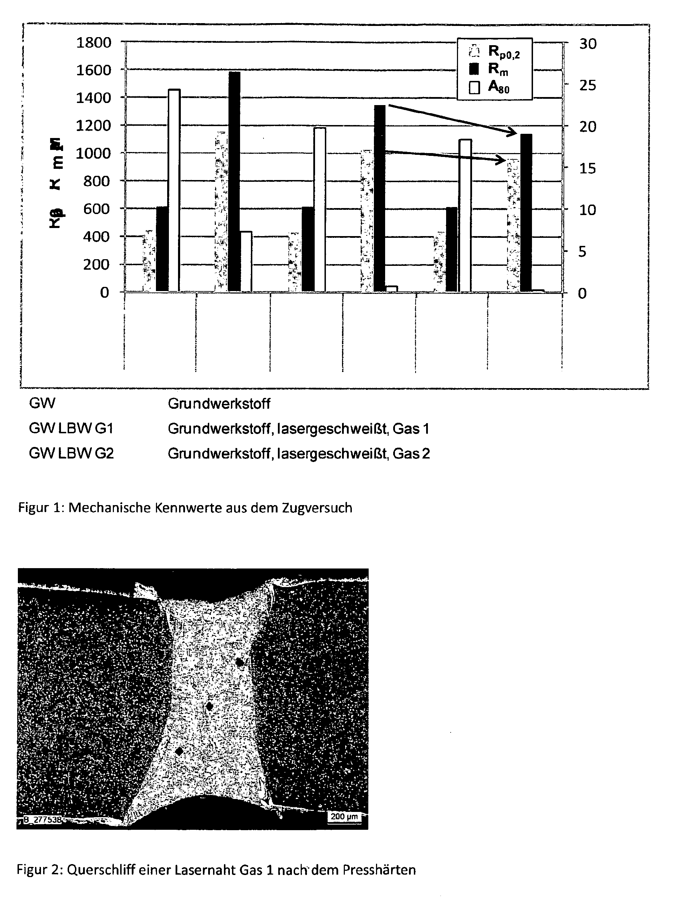

Anschließend wurde diese Blechplatine bei einer Ofentemperatur von 950°C 8 Minuten lang aufgeheizt und nach Erwärmung auf Umformtemperatur warm verpresst mit einer Werkzeugoberflächentemperatur von 125°C, einer Haltezeit von 30s und anschließender Abkühlung an Luft. Im Vergleich dazu wurden nicht wärmebehandelte Proben untersucht. Die mechanischen Kennwerte sind in Figur 1 dargestellt.

Bei den Versuchen wurde eine Prozesskette entsprechend den Kundenanforderungen realisiert:
1.Schweißen im Anlieferungszustand
2.Warmformen (Presshärten) mit Schweißnaht
3.Bauteil mit gebrauchstauglicher Schweißverbindung

Die Einflussnahme auf die Ausbildung des Schweißgutes unter Verwendung spezieller Schweißgase wird dabei beim Schweißen im Anlieferungszustand vorgenommen.

Das Warmformen wird in der Regel beim Kunden durchgeführt. Dabei werden die Eigenschaften der Grundwerkstoffe und der Schweißverbindung verändert. Mindestens bei einem Fügepartner soll eine extreme Festigkeitserhöhung realisiert werden. Die Schweißverbindung sollte dann ein Tragverhalten aufweisen, das nahezu dem Tragverhalten des nach dem Warmformen "schwächeren" Fügepartners entspricht.

Anhand metallographischer Schliffe und Al-Konzentrations-Mappings vor dem Presshärten wurden zwei Verbindungen für die weiteren Untersuchungen ausgewählt. Es zeigte sich, dass unter Verwendung des Schutzgases 1 (97% Ar, 2,5% CO₂, 0,5% O₂) eine deutlich gleichmäßigere und feinere Verteilung der Al-haltigen Phasen im Schweißgut im Vergleich zu Schutzgas 2 (50% Ar, 50% He) erreicht werden konnte.

Als ursächlich für diesen Unterschied konnte eine deutliche Veränderung der Schmelzbaddynamik beim Schweißen mit den verschiedenen Schutzgasen ermittelt werden.

Im quasistatischen Zugversuch vor dem Presshärten versagen alle Verbindungen im unbeeinflussten Grundwerkstoff und es wurden entsprechende Festigkeitswerte des Grundwerkstoffs ermittelt (Figur 1).

Desweiteren wurde das Tragverhalten der Verbindungen nach dem Presshärten untersucht. Hierfür waren die Verbindungen gemäß dem oben beschriebenen thermomechanischen Zyklus vergütet worden (Presshärten).

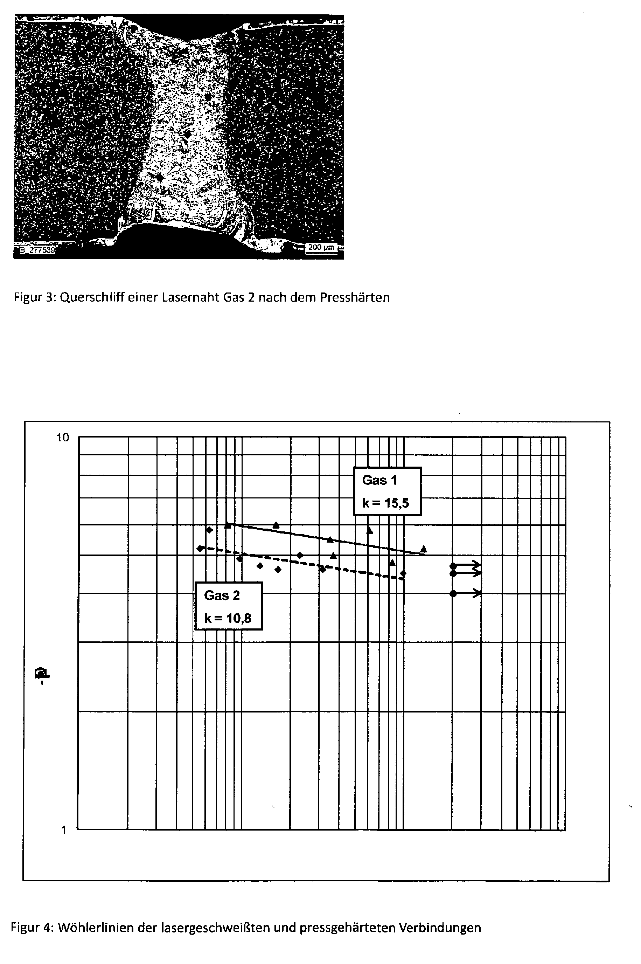

Anschließend wurden zunächst wieder metallographische Schliffe erstellt (Figur 2 und 3). Beim Schweißen unter Schutzgas 1 ist im Vergleich zum Schweißen unter Schutzgas 2 eine wesentlich homogenere Gefügeausbildung im Schweißgut zu erkennen.

Unter quasistatischer Last (Figur 1) weisen die unter Schutzgas 1 geschweißten Verbindungen bessere Kennwerte auf als die unter Schutzgas 2 geschweißten Verbindungen.

Auch beim dynamischen Schwingversuch (Figur 4) weisen die unter Schutzgas 1 geschweißten Verbindungen ein signifikant besseres Verhalten unter dynamischer Last auf als die unter Schutzgas 2 geschweißten Verbindungen.

## Patentansprüche

1. Verfahren zum Laserstrahlschweißen eines mit einem metallischen Überzug versehenen Vorproduktes aus Stahl unter Schutzgas wobei der Überzug im Wesentlichen aus hochschmelzenden, während des Schweißens nicht verdampfenden Legierungsbestandteilen besteht und bei dem der metallische Überzug in eine beim Schweißen gebildete Schweißnaht einbezogen wird
**dadurch gekennzeichnet,**
**dass** die Schmelzbaddynamik des Schweißgutes durch Schweißen unter Verwendung eines Schutzgases, bestehend aus Ar, CO₂ und O₂. derart beeinflusst wird, dass die Legierungselemente des metallischen Überzugs eine intensive Durchmischung mit dem Schweißgut in der Weise erfahren, so dass diese nach der Erstarrung in fein verteilter Form hierin vorliegen.

2. Verfahren nach Anspruch 1
**dadurch gekennzeichnet,**
**dass** die Schmelzbaddynamik durch das Schutzgas als Prozessparameter beeinflusst wird.

3. Verfahren nach Anspruch 1
**dadurch gekennzeichnet,**
**dass** das Schutzgas aus 0,5-20% CO₂, 0,1-10% O₂ und Rest Ar besteht.

4. Verfahren nach einem der Ansprüche 1 bis 3
**dadurch gekennzeichnet,**
**dass** das Vorprodukt aus einem warmumformbaren Stahl besteht.

5. Verfahren nach Anspruch 4
**dadurch gekennzeichnet,**
**dass** der warmumformbare Stahl ein borhaltiger oder ein lufthärtender Stahl ist.

6. Verfahren nach Anspruch 5
**dadurch gekennzeichnet,**
**dass** der borhaltige Stahl ein 22MnB5 ist.

7. Verfahren nach einem der Ansprüche 1 bis 6
**dadurch gekennzeichnet,**
**dass** der metallische Überzug aus Al und/oder einer Al-Legierung besteht.

8. Verfahren nach Anspruch 7
**dadurch gekennzeichnet,**
**dass** der metallische Überzug neben Al eines oder mehrere der Elemente Fe, Si, Mg oder Cr enthält.

9. Verwendung des Verfahren nach mindestens einem der Ansprüche 1 bis 8 für Komponenten im Fahrzeugkarosseriebau, im Maschinenbau oder Baubereich.
